# EUROPÄISCHE PATENTSCHRIFT

(11) **EP 1 662 155 B1**
(45) Veröffentlichungstag und Bekanntmachung des Hinweises auf die Patenterteilung: **28.03.2007**
(21) Anmeldenummer: 05012078.1
(22) Anmeldetag: 04.06.2005
(51) Int. Cl.: F16B 5/06, B62D 25/16

(54) **Kunststoffanbauteil für ein Kraftfahrzeug**
Fixed plastic part for a vehicle
Fixation de pièce plastique pour véhicule

(30) Priorität: 24.11.2004 DE 102004056603
(43) Veröffentlichungstag der Anmeldung: 31.05.2006
(73) Patentinhaber: REHAU AG + Co, 95111 Rehau (DE)
(72) Erfinder: Mett, Thomas, 95182 Döhlau (DE); Lux, Stefan, 95182 Döhlau (DE)

(56) Entgegenhaltungen:
- DE-C1- 10 116 319
- US-A- 5 429 412
- US-B1- 6 581 252

## Beschreibung

Die Erfindung betrifft ein Kunststoffanbauteil zum Anbau an ein Karosserieelement eines Kraftfahrzeugs nach dem Oberbegriff des Anspruchs 1.

Ein derartiges Kunststoffanbauteil ist durch offenkundige Vorbenutzung bekannt. Derartige Kunststoffanbauteile dienen beispielsweise als Blenden. Bei einer Längenänderung des Kunststoffanbauteils, die sich insbesondere aufgrund des thermischen Expansionskoeffizienten und den wechselnden Einsatztemperaturen eines Kraftfahrzeugs zwangsläufig ergibt, lassen sich beim bekannten Kunststoffanbauteil Beeinträchtigungen des optischen Gesamteindrucks im Spaltbereich zwischen dem Kunststoffanbauteil und dem Karosserieelement nicht ausschließen.

Aus der DE 101 16 319 C1 ist ferner ein Kunststoffanbauteil bekannt, dessen Position relativ zu einem Karosserieelement, an dem das Kunststoffanbauteil angebaut ist, über eine justierbare Befestigungsvorrichtung festgelegt ist. Auch die in der US 5,429,412 A beschriebene Verbindungsmöglichkeit eines Kotflügels an einem darunter liegenden Holm eines Kraftfahrzeugs mittels einer Schraube, die in einem Langloch verschiebbar angeordnet ist und mit einer Mutter in der endgültigen Position die beiden Bauteile fixiert ist in der Herstellung und bei der Montage recht aufwändig. Die oben geschilderten und insbesondere durch eine thermische Expansion hervorgerufenen Probleme lassen sich auch durch eine derartige Justage-/Verbindungsmöglichkeit nicht wirklich beheben.

Es ist daher eine Aufgabe der vorliegenden Erfindung, ein Kunststoffanbauteil der eingangs genannten Art derart weiterzubilden, dass der optische Gesamteindruck eines an ein Karosserieefernent eines Kraftfahrzeugs angebauten derartigen Kunststoffanbauteils im Spaltbereich zwischen dem Kunststoffanbauteil und dem Karosserieelement auch bei einer Längenänderung des Kunststoffanbauteils, insbesondere durch thermische Einflüsse, nicht leidet.

Diese Aufgabe ist erfindungsgemäß gelöst durch ein Kunststoffanbauteil mit den im Kennzeichnungsteil des Anspruchs 1 angegebenen Merkmalen.

Erfindungsgemäß wurde erkannt, dass es nicht zwingend erforderlich ist, das Kunststoffanbauteil über den Verbindungsabschnitt am rahmenfesten Fahrzeugbauteil in allen drei Raumrichtungen starr festzulegen.

Über das Toleranzausgleichselement wird im Bereich des Verbindungsabschnitts des Kunststoffanbauteils ein Freiheitsgrad geschaffen, der dazu genutzt werden kann, negative Auswirkungen auf den optischen Eindruck bei einer Längenänderung des Kunststoffanbauteils zu vermeiden. Die Verbindung zwischen dem Kunststoffanbauteil und dem rahmenfesten Fahrzeugbauteil stellt aufgrund des Toleranzausgleichselements ein Loslager dar. Bei einer Längenänderung des Kunststoffanbauteils kommt es im Spaltbereich am Übergang zwischen dem Kunststoffanbauteil und dem Karosserieelement, an dem das Kunststoffanbauteil angebaut wird, oder einem anderem Karosserieelement zu keiner Relativbewegung des Kunststoffanbauteils zum Karosserieelement. Es resultiert ein konstantes Spaltmaß mit entsprechend guter optischer Wirkung. Der Verbindungsabschnitt ist dann im Sinne des Anspruchs 1 am Fahrzeugbauteil gesichert, wenn ein ungewolltes Lösen des Kunststoffanbauteils vom Fahrzeugbauteil nicht möglich ist. Das erfindungsgemäße Kunststoffanbauteil kann so ausgestaltet sein, dass es ohne Mehraufwand im Vergleich zu einem konventionellen Kunststoffanbauteil mittels Spritzguss hergestellt werden kann. Die Abdeckfunktion des Kunststoffanbauteils bleibt voll erhalten. Ein Zusatzaufwand durch zusätzliche Ausgleichselemente oder durch eine justierbare Befestigungsvorrichtung entfällt. Insbesondere ist der Verbindungsabschnitt ein integraler Bestandteil des Kunststoffanbauteils, der an dem Grundkörper des Kunststoffanbauteils einstückig angeformt ist. Das Kunststoffanbauteil kann mit dem erfindungsgemäßen Toleranzausgleich auch zwischen zwei vom Kunststoffanbauteil verschiedenen Karosserieelementen wirken. Der Toleranzausgleich des Kunststoffanbauteils wirkt dabei so, dass ein konstantes Spaltmaß zwischen den beiden Karosserieelementen trotz einer möglichen Längenausdehnung von diesen resultiert. In diesem Fall muss das Kunststoffanbauteil nicht notwendigerweise einen eine Außenhautebene vorgebenden Außenhautabschnitt aufweisen.

Ein Spaltbegrenzungsabschnitt nach Anspruch 2 gewährleistet eine definierte Anlage des Kunststoffanbauteils am Karosserieelement.

Abstandselemente nach Anspruch 3 lassen sich bei der Herstellung des Kunststoffanbauteils kostengünstig mit anformen.

Ein Abstandselement nach Anspruch 4 kann mit geringem Aufwand zusätzlich aufgebracht werden und verhindert eine Beschädigung des Kunststoffanbauteils.

Bei einem Toleranzausgleichselement nach Anspruch 5 ist eine Relativbewegung des Verbindungsabschnitts zum rahmenfesten Fahrzeugbauteil über die elastische Deformation des mindestens einen Stegs gegeben.

Eine Aufnahme nach Anspruch 6 vereinfacht die Montage des Kunststoffanbauteils.

Eine Mehrzahl von Stegen nach Anspruch 7 führt zu einem sicheren Toleranzausgleich und zu einer definierten Toleranzausgleichsbewegung.

Eine Gestaltung des Kunststoffanbauteils nach Anspruch 8 vereinfacht die Montage von diesem.

Bei einem Kunststoff-Anbauteil nach Anspruch 9 ist der Verbindungsabschnitt elegant versteckt, so dass er von außen nicht sichtbar ist.

Ein Ausführungsbeispiel der Erfindung wird nachfolgend anhand der Zeichnungen erläutert. In dieser zeigen:
- Fig. 1: einen Schnitt durch einen Außenhautbereich eines Kraftfahrzeugs mit einem Kunststoffanbauteil, welches einem Karosserieelement des Kraftfahrzeugs benachbart ist;
- Fig. 2: einen Schnitt durch das Kunststoffanbauteil gemäß Linie II-II in Fig. 1;
- Fig. 3 und 4: zu Fig. 2 ähnliche Darstellungen des Kunststoffanbauteils in verschiedenen Momentanpositionen eines Toleranzausgleichselements;
- Fig. 5 und 6: zwei Ausführungsbeispiele von Abstandselementen für das Kunststoffanbauteil.

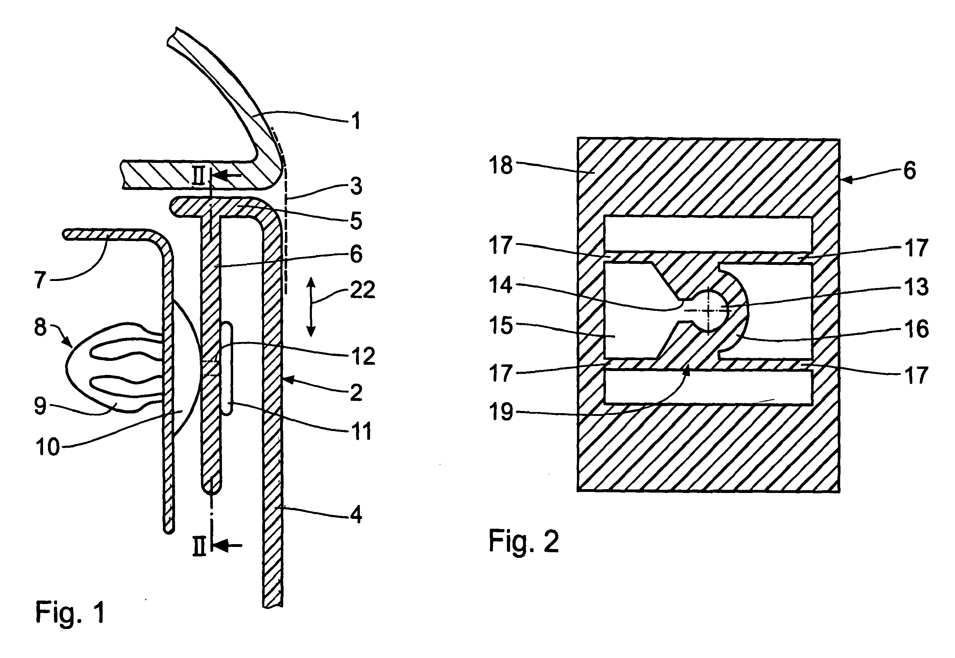

Fig. 1 zeigt im Schnitt einen Karosserieaußenbereich eines ansonsten nicht dargestellten Kraftfahrzeugs mit einem Karosserieelement 1, an dem ein Kunststoffanbauteil 2 angebaut ist. Das Kunststoffanbauteil 2 weist einen eine Außenhautebene 3, die in Fig. 1 gestrichelt angedeutet ist, vorgebenden Außenhautabschnitt auf. Letzterer ist über einen Spaltbegrenzungsabschnitt 5 des Kunststoffanbauteils 2 benachbart zum Karosserieelement 1 angeordnet.

Über den Spaltbegrenzungsabschnitt 5 ist der Verbindungsabschnitt 6 am Außenhautabschnitt 4 angeformt. Der Außenhautabschnitt 4 überdeckt den Verbindungsabschnitt 6, so dass letzterer von außen nicht sichtbar ist.

Über den Verbindungsabschnitt 6 ist das Kunststoffanbauteil 2 mit einem rahmenfesten Fahrzeugbauteil 7 verbunden. Zu dieser Verbindung dient ein Clipselement 8. Letzteres ist mit einem elastisch komprimierbaren Clipsfuß 9 durch eine Durchgangsöffnung im Fahrzeugbauteil 7 derart hindurchgesteckt, dass das Clipselement 8 zum Fahrzeugbauteil 7 spielfrei gehaltert ist. Das Clipselement 8 weist ferner einen ballig ausgeführten Distanzabschnitt 10 zwischen dem Fahrzeugbauteil 7 und dem Verbindungsabschnitt 6 sowie auf der gegenüberliegenden Seite des Verbindungsabschnitts 6 einen Kopfabschnitt 11 auf. Der Clipsfuß 9 ist am Distanzabschnitt 10 angeformt. Der Distanzabschnitt 10 ist mit dem Kopfabschnitt 11 über einen verjüngten und in Fig. 1 verdeckt dargestellten Bolzenabschnitt 12 verbunden. Letzterer durchtritt den Verbindungsabschnitt 6 durch eine Aufnahme 13 des Verbindungsabschnitts 6. Über einen Verengungsabschnitt 14 öffnet sich die Aufnahme 13 hin zu einer größeren Einführöffnung 15. Die Weite des Verengungsabschnitts 14 ist minimal kleiner, als der Durchmesser des Bolzenabschnitts 12. Vom Verengungsabschnitt 14 abgesehen, ist der Innendurchmesser der Aufnahme 13 kleiner, als die Durchmesser des Kopfabschnitts 11 und des Distanzabschnitts 10. Ein die Aufnahme 13 enthaltender Aufnahmeabschnitt 16 des Verbindungsabschnitts 6, der in der Darstellung der Fig. 2 in etwa die Form eines liegenden Buchstabens Ω (Omegaform) hat, ist über insgesamt vier elastisch verformbare Stege 17 mit einem rechteckigen Grundkörper 18 verbunden. Der Aufnahmeabschnitt 16 bildet zusammen mit den Stegen 17 ein Toleranzausgleichselement 19 des Verbindungsabschnitts 6 des Kunststoffanbauteils 2. Die Stege 17 sind in der Zeichnung schematisch als gerade verlaufend dargestellt. Zur Ermöglichung einer Verformung der Stege während des Toleranzausgleichs können diese auch eine von einem geradlinigen Verlauf abweichende Form haben. Beispiele derartiger Stegverläufe sind ein Verlauf mit einem V-förmigen Soll-Biegeabschnitt, ein wellenförmiger Verlauf, wobei für die Amplitude der Wellenabschnitte je nach den gestellten Anforderungen, unterschiedliche Werte vorgegeben werden können, sowie ein gebogener Verlauf.

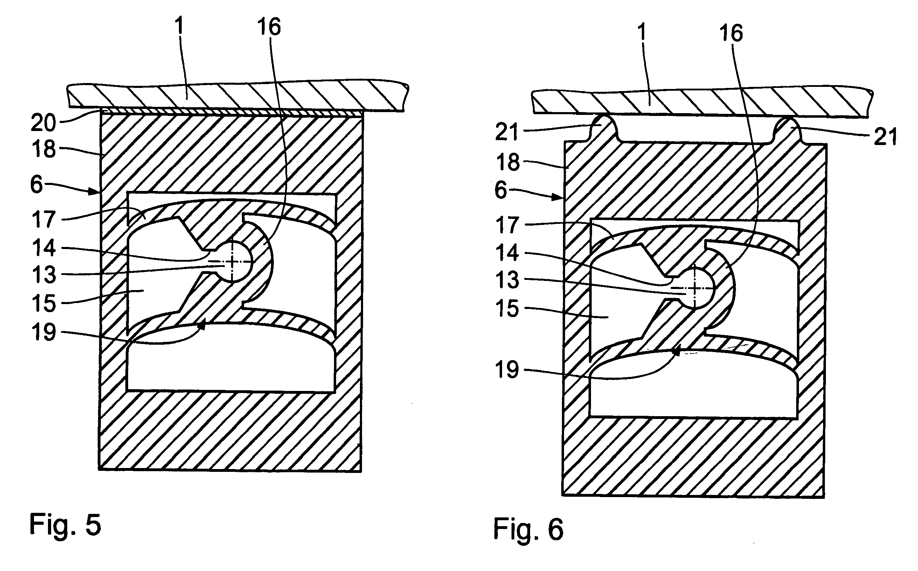

Über ein in den Fig. 1 und 2 nicht dargestelltes Abstandselement liegt das Kunststoffanbauteil 2 am Karosserieelement 1 an. Die Fig. 5 und 6 zeigen Alternativen für ein derartiges Abstandselement. Fig. 5 zeigt als Abstandselement eine Scheuerschutzauflage 20.

Fig. 6 zeigt als Abstandselement zwei ballig ausgebildete Abstandsnocken oder -rippen 21, die einstückig am Grundkörper 18 angeformt sind.

Die Fig. 2 bis 4 stellen drei mögliche Momentanpositionen des Toleranzausgleichsauselements 19 des Verbindungsabschnitts 6 dar.

Über das Toleranzausgleichselement 19 ist bei am Fahrzeugbauteil 7 gesicherten Verbindungsabschnitt 6 eine Relativbewegung des Verbindungsabschnitts 6 zum Fahrzeugbauteil 7 in der Außenhautebene 3 möglich.

Diese Relativbewegungsrichtung ist in Fig. 1 durch einen Doppelpfeil 22 angedeutet.

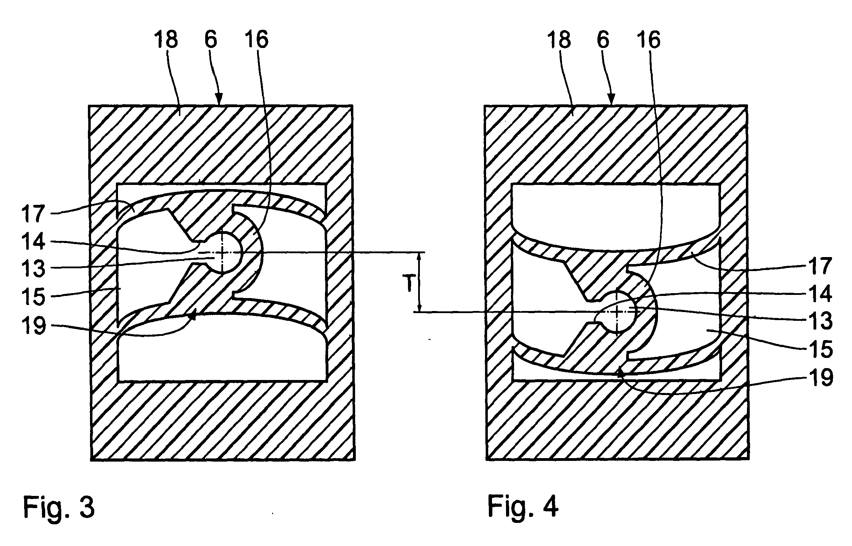

Die beiden Momentanpositionen nach den Fig. 3 und 4 zeigen das Toleranzausgleichselement 19 nahe zweier Extremtoleranzausgleichspositionen. In Fig. 3 ist der Aufnahmeabschnitt 16 weitest möglich nach oben und in Fig. 4 weitestgehend nach unten ausgelenkt. In den Extrempositionen nach den Fig. 3 und 4 sind die Stege 17 maximal elastisch verformt. Der zwischen diesen beiden Extrempositionen mögliche Toleranzausgleich in der Relativbewegungsrichtung 22 ist zwischen den Fig. 3 und 4 mit T dargestellt. Fig. 2 zeigt das Toleranzausgleichselement 19 in einer Nullstellung des Toleranzausgleichs. Hierbei sind die Stege 17 nicht elastisch verformt.

Das Kunststoffanbauteil 2 wird folgendermaßen montiert: zunächst wird das Kunststoffanbauteil 2 so mit dem Clipselement 8 verbunden, dass der Kopfabschnitt 11 des Clipselements 8 die Einführöffnung 15 des Verbindungsabschnitts 6 durchtritt. Dann wird der Verbindungsabschnitt 6 in der Außenhautebene 3 senkrecht zum Doppelpfeil 22 so verschoben, dass der Bolzenabschnitt 12 durch den Verengungsabschnitt 14 hindurchgeführt wird und in der Aufnahme 13 des Aufnahmeabschnitts 16 zu liegen kommt. Die Aufnahme 13 stellt also eine Clipsaufnahme dar.
Da der Verengungsabschnitt 14 eine etwas geringere Weite aufweist als der Durchmesser des Bolzenabschnitts 12, ist letzterer in der Aufnahme 13 gesichert. Anschließend wird zur Montage des Kunststoffanbauteils 2 der Clipsfuß 9 des Clipselements 8 in das Fahrzeugbauteil 7 eingesteckt. Das Clipselement 8 ist dann formschlüssig und weitgehend spielfrei am Fahrzeugbauteil 7 festgelegt.

Das Kunststoffanbauteil 2 ist so bemaßt, dass es in der montierten Position immer über das Abstandselement am Karosserieelement 1 anliegt.
Dabei kann das Kunststoffanbauteil 2 über das Toleranzausgleichselement 19 bei minimaler thermischer Expansion etwas gegen das Karosserieelement 1 vorgespannt sein.

Wenn es nun, z.B. aufgrund einer thermischen Expansion, zu einer Ausdehnung des Kunststoffanbauteils 2 zwischen dem durch den Aufnahmeabschnitt 16 vorgegebenen Befestigungspunkt und dem Anlagepunkt des Kunststoffanbauteils 2 über das Abstandselement am Karosserieelement 1 kommt, kann das Toleranzausgleichselement 19 bei einer derartigen Längenänderung nachgeben, so dass z.B. die in Fig. 3 dargestellte Momentanposition des Verbindungsabschnitts 6 erreicht wird. Eine Ausdehnung des Kunststoffanbauteils 2 führt daher nicht zu einer Änderung des Spaltmaßes zwischen dem Karosserieelement 1 und dem Kunststoffanbauteil 2. Das Abstandselement des Kunststoffanbauteils 2 dient bei einer derartigen Längenänderung als Festlager und das Toleranzelement 19 als Loslager. Eine unerwünschte Deformation des Kunststoffanbauteils 2 als Folge einer Längenänderung findet daher nicht statt.

Nicht dargestellt Varianten des Verbindungsabschnitts 6 weisen eine Form der Aufnahme 13 auf, die von der Ω-Form (Omegaform) des dargestellten Ausführungsbeispiels abweicht. Bei einer Variante des Verbindungsabschnitts 6 ist diese Aufnahme als Langloch ausgeführt. Bei einer weiteren Variante weist die Aufnahme zwei runde Öffnungen, insbesondere unterschiedlichen Innendurchmessers, auf, die über einen Verengungsabschnitt miteinander verbunden sind. Es ist klar, dass auch andere Formen dieser Aufnahme möglich sind, abhängig jeweils von der Gestaltung des hiermit zusammenwirkenden Montageelements.

## Patentansprüche

1. Kunststoff-Anbauteil (2) zum Anbau an ein Karosserieelement (1) eines Kraftfahrzeugs
- mit einem eine Außenhautebene (3) vorgebenden Außenhautabschnitt (4),
- mit einem Verbindungsabschnitt (6), über den das Kunststoffanbauteil (2) mit einem rahmenfesten Fahrzeugbauteil (7) verbindbar ist, wobei der Verbindungsabschnitt (6) ein Toleranzausgleichselement (19) aufweist, welches derart ausgeführt ist, dass es bei am Fahrzeugbauteil (7) gesichertem Verbindungsabschnitt (6) eine Relativbewegung (22) des Verbindungsabschnitts (6) zum rahmenfesten Fahrzeugbauteil (7) in der Außenhautebene (3) gestattet und eine Aufnahme (13) zum Durchtritt eines Befestigungselements (8) zur Befestigung am rahmenfesten Fahrzeugbauteil (7) aufweist,
**dadurch gekennzeichnet, dass** die Aufnahme (13) über mindestens einen elastisch verformbaren Steg (17) mit einem Grundkörper (18) des Toleranzausgleichselements (19) verbunden ist.

2. Kunststoffanbauteil nach Anspruch 1, **dadurch gekennzeichnet, dass** der Außenhautabschnitt (4) über einen Spaltbegrenzungsabschnitt (5) benachbart zum KarosserieElement (1) anordenbar ist, wobei der Spaltbegrenzungsabschnitt (5) ein Abstandselement (20; 21) aufweist, welches am Karosserieelement (1) anlegbar ist.

3. Kunststoffanbauteil nach Anspruch 2, **dadurch gekennzeichnet, dass** das Abstandselement (21) durch mindestens eine Abstandsnocke oder -rippe gebildet ist.

4. Kunststoffanbauteil nach Anspruch 2, **dadurch gekennzeichnet, dass** das Abstandselement (20) durch eine Scheuerschutzauflage gebildet ist.

5. Kunststoffanbauteil nach einem der Ansprüche 1 bis 4, **dadurch gekennzeichnet, dass** die Aufnahme (13) als Clipsaufnahme gestaltet ist.

6. Kunststoffanbauteil nach einem der Ansprüche 1 bis 5, **gekennzeichnet durch** eine Mehrzahl von elastisch verformbaren Stegen (17).

7. Kunststoffanbauteil nach einem der Ansprüche 1 bis 6, **dadurch gekennzeichnet, dass** der Verbindungsabschnitt (6) einstückig an den Außenhautabschnitt (4) angeformt ist.

8. Kunststoffanbauteil nach einem der Ansprüche 1 bis 7, **dadurch gekennzeichnet, dass** der Verbindungsabschnitt (6) so gegenüber dem Außenhautabschnitt (4) nach innen versetzt ausgeführt ist, dass der Außenhautabschnitt (4) den Verbindungsabschnitt (6) überdeckt.

## Claims

1. Plastic attachment (2) for attaching to a body element (1) of a motor vehicle,
- with an outer skin section (4) predetermining an outer skin plane (3),
- with a connecting section (6) via which the plastic attachment (2) can be connected to a frame-secured vehicle component (7), wherein the connecting section (6) has a tolerance-compensating element (19) which is designed in such a manner that, when the connecting section (6) is secured on the vehicle component (7), the said tolerance-compensating element permits a relative movement (22) of the connecting section (6) with respect to the frame-secured vehicle component (7) in the outer skin plane (3) and has a receptacle (13) for the passage of a fastening element (8) for fastening to the frame-secured vehicle component (7), **characterized in that** the receptacle (13) is connected to a basic body (18) of the tolerance-compensating element (19) via at least one elastically deformable web (17).

2. Plastic attachment according to Claim 1, **characterized in that** the outer skin section (4) can be arranged adjacent to the body element (1) via a gap-bounding section (5), wherein the gap-bounding section (5) has a spacer element (20; 21) which can be placed on the body element (1).

3. Plastic attachment according to Claim 2, **characterized in that** the spacer element (21) is formed by at least one spacer cam or spacer rib.

4. Plastic attachment according to Claim 2, **characterized in that** the spacer element (20) is formed by an anti-abrasion pad.

5. Plastic attachment according to one of Claims 1 to 4, **characterized in that** the receptacle (13) is designed as a clip receptacle.

6. Plastic attachment according to one of Claims 1 to 5, **characterized by** a plurality of elastically deformable webs (17).

7. Plastic attachment according to one of Claims 1 to 6, **characterized in that** the connecting section (6) is integrally formed as a single piece on the outer skin section (4).

8. Plastic attachment according to one of Claims 1 to 7, **characterized in that** the connecting section (6) is designed in a manner offset inwards with respect to the outer skin section (4) such that the outer skin section (4) covers the connecting section (6).

## Revendications

1. Pièce de fixation en plastique (2) pour la fixation sur un élément de carrosserie (1) d'un véhicule automobile,
- comprenant une portion de peau extérieure (4) prédéfinissant un plan de peau extérieure (3),
- comprenant une portion de connexion (6) par le biais de laquelle la pièce de fixation en plastique (2) est connecté à un composant du véhicule (7) fixé au châssis, la portion de connexion (6) présentant un élément de compensation des tolérances (19) qui est réalisé de telle sorte qu'il permette, lorsque la portion de connexion (6) est fixée sur le composant du véhicule (7), un mouvement relatif (22) de la portion de connexion (6) par rapport au composant du véhicule (7) fixé au châssis dans le plan de peau extérieure (3) et qu'il présente un logement (13) pour le passage d'un élément de fixation (8) pour la fixation au composant du véhicule (7) fixé au châssis,
**caractérisé en ce que** le logement (13) est connecté à un corps de base (18) de l'élément de compensation des tolérances (19) par le biais d'au moins une nervure (17) déformable élastiquement.

2. Pièce de fixation en plastique selon la revendication 1, **caractérisé en ce que** la portion de peau extérieure (4) est ordonné dans une portion de limitation de fente (5) à proximité de l'élément de carrosserie (1), la portion de limitation de fente (5) présentant un élément d'espacement (20 ; 21) qui est appliqué contre l'élément de carrosserie (1).

3. Pièce de fixation en plastique selon la revendication 2, **caractérisé en ce que** l'élément d'espacement (21) est formé par au moins une came ou une ailette d'espacement.

4. Pièce de fixation en plastique selon la revendication 2, **caractérisé en ce que** l'élément d'espacement (20) est formé par un support de protection contre les abrasions.

5. Pièce de fixation en plastique selon l'une quelconque des revendications 1 à 4, **caractérisé en ce que** le logement (13) est configuré comme un logement à enclipsage.

6. Pièce de fixation en plastique selon l'une quelconque des revendications 1 à 5, **caractérisé par** une pluralité de entretoises (17) déformables élastiquement.

7. Pièce de fixation en plastique selon l'une quelconque des revendications 1 à 6, **caractérisé en ce que** la portion de connexion (6) est formée d'une pièce monobloc dans la portion de peau extérieure (4).

8. Pièce de fixation en plastique selon l'une quelconque des revendications 1 à 7, **caractérisé en ce que** la portion de connexion (6) est réalisée de manière décalée vers l'intérieur par rapport à la portion de peau extérieure (4) de telle sorte que la portion de peau extérieure (4) recouvre la portion de connexion (6).
